# EUROPEAN PATENT APPLICATION

(11) **EP 4 826 125 A1**
(43) Date of publication of application: **21.10.2026**
(21) Application number: 25171047.1
(22) Date of filing: 16.04.2025
(51) Int. Cl.: C25B 1/04, C25B 9/70, C25B 15/02, C25B 15/025, C25B 15/08

(54) **CONDUCTING ELECTROLYSIS IN MULTIPLE PARALLEL ELECTROLYSIS CELLS AND SYSTEM FOR SUCH**

(71) Applicant: Avantium Technologies B.V., 1014 BV Amsterdam (NL)
(72) Inventor: ESPINAS, Jeff, 1014 BV Amsterdam (NL); MOONEN, Roel, 1014 BV Amsterdam (NL); VILLALBA, Matias, 1014 BV Amsterdam (NL)
(74) Representative: Avantium Intellectual Property

(57) **Abstract**

A system for conducting electrolysis for producing hydrogen from an electrolyte by conducting such in multiple parallel electrolysis cells, as well as a process for electrolysis using such system. More in particular, the system supplies multiple cells from a shared electrolyte source.

## Description

### Introduction

The present invention relates to a system for conducting electrolysis for producing hydrogen from an electrolyte by conducting such in multiple parallel electrolysis cells, as well as a process for electrolysis using such system. More in particular, the system has multiple cells, and a feed for supplying such multiple cells from a shared electrolyte source.

### Background of the invention

Hydrogen is of growing interest, both as a potential energy carrier as well as a base material in demand by (chemical) industry. Although hydrogen can be made from methane (of e.g. natural gas, so-called grey hydrogen), there is a growing interest to produce hydrogen by electrolysis of water. Reason is that water is abundantly available, and secondly when electrical power from sources like wind power or solar power is used to drive such electrolysis, this allows for so-called green hydrogen to be manufactured, not involving fossil energy. Electrolysis of water to produce hydrogen is conducted in electrolysis cells.

Electrolysis cells to convert water with electrical energy into hydrogen and oxygen come in different types. A key difference is in how hydrogen and oxygen are kept separate as much as possible in production. This involves usually a layer called membrane or diaphragm between anode and cathode. Promising electrolysis cells are: proton-exchange membrane cells (PEM) in which protons can pass the membrane between anode and cathode when in operation, anion exchange membrane cells (AEM) in which hydroxide anions can pass the membrane when in operation, and the alkaline electrolysis (AEL) system in which hydroxide anions can pass the diaphragm when in operation. Depending on the operation and design, also water molecules can pass the membrane or diaphragm in these systems, but hydrogen molecules and oxygen molecules cannot (or in any case very limited).

In order to get a maximum hydrogen yield from every kilowatt of energy, research is being conducted on the efficiency of these types of electrolysis cells. Such research is e.g. directed on type, material and shape of the electrodes, the membrane or diaphragm between the electrodes, operating conditions like temperature, pressure, composition of the electrolyte, electrical current and potential, and other aspects.

Traditionally, researching the PEM, AEL or AEM electrolysis systems described above involve test arrangements with single cells in which elements like membranes and electrodes can be exchanged. Typical sizes for such cells for research purposes involve 10 cm² membrane/diaphragm. Such cell in a research environment will have auxiliary equipment like supply of electrolyte, regulators for the pressure and/or flow thereof, arrangements for regulating the temperature at which the cell is operated, power supply and measuring power consumption, and equipment for capturing and analysing the gasses produced and separating such from liquids such as excess electrolyte.

Traditionally, such research is on single cells. Such single cell test stands are useful, but in order to multiply the output of research large scale screening of materials and conditions is desired. Large scale screening in this case would involve operating multiple electrolysis cells in parallel, using equipment in which 4, 8 or more cells are operated in parallel, at least partially in simultaneous fashion. Without taking additional measures, such test arrangements having e.g. 4 cells would then also require 4 times all the auxiliary equipment, such as electrolyte supply and off-gas treatment and analysis. This is a disadvantage as it multiplies complexity, space requirements and cost of the research equipment.

Patent application EP4257732 discloses multiple electrolysers (alkaline water electrolysis system) which are operated in parallel. The electrolysers in this document have a shared gas-liquid separator downstream of the cells, but each cell has its own pump (reference (90) in the drawings) to supply each cell. Such may be fine when cells are operated in parallel with the aim of boosting production of hydrogen, as is the case for this equipment, but when multiple cells are operated in parallel for the purposes of conducting research such is unnecessarily complex, and multiple parallel pumps may not fit the small space in research equipment, especially when the electrolysis cells themselves are small.

Hence, there is a need for a system allowing the operation of multiple electrolysis cells for producing hydrogen from an aqueous electrolyte, which multiple electrolysis cells are operated in parallel, so as to allow research being conducted on multiple cells simultaneously. There is also a need for such system, despite having multiple cells, that is not overly complex or costly in auxiliary equipment. At the same time, it is desired that the drive for simplification in auxiliary equipment should not result in test conditions that are sub-optimal. More in particular, it is desired that multiple electrolysis cells can be operated in parallel, which cells have a supply of electrolyte which is stable in terms of flow and pressure.

### Summary of the invention

It has now been found that the above objective(s) may be achieved, at least in part, by a system for conducting electrolysis of an aqueous liquid to produce hydrogen and oxygen, which system comprises:
a. multiple parallel electrolyser cells, each electrolyser cell comprising an anode and a cathode,
b. a first electrolyte feed system to feed electrolyte to each electrolyser cell, the first electrolyte feed system comprising:
   - an electrolyte,
   - a pump for pumping the electrolyte,
   - a manifold having an inlet connected to the pump, the manifold splitting said inlet in multiple feed lines, each feed line connected to a single electrolyser cell,
   - each feed line comprising a flow restrictor downstream of the manifold and upstream of the electrolyser cells,
   wherein the manifold is made of electrically non-conductive material and/or all feed lines comprise at least a section that is made of electrically non-conductive material,
c. each electrolyser cell containing one or more outlets for gas and/or liquid,
d. a power supply, for supplying electrolyser cells with electric potential

The invention further relates to a process for electrolysing an aqueous electrolyte to produce hydrogen and oxygen using one of the systems according to the present invention.

### Detailed description of the invention

In the present invention, "electrically non-conductive" is herein to be understood as non-conductive for electrical current, to the extent that the material has an electrical resistance of at least 100 ohm, preferably at least 1000 ohm.

The system according to the present invention has a common feed for multiple electrolyser (or electrolysis, used and understood interchangeable herein) cells that are operated in parallel. A big advantage of such is that, despite having multiple cells, which greatly enhances research output, one can do with only a single source of electrolyte and a single pump, thus limiting the number of hardware elements. Also, an advantage is, when small cells are chosen for research purposes, there is only limited space required for electrolyte supply, and thus such can be assembled together in a compact overall equipment and with short feed lines. However, when the cells are linked to such single feed of electrolyte, care should be taken that there are no stray currents or even short circuit from one electrolysis cell to another electrolyser cell via the common feed. For this reason, there should at least be some feature electrically isolating the feed channels from each other to a sufficient degree. For this reason the system should contain at least a section that is made from electrically non-conductive material. Such section which avoids cells being electrically connected to each other through the feed lines can be in the manifold or in each feed lines or both. In the present invention, "electrolyser cell" also includes a stack of cells, and consequently "multiple parallel electrolyser cells" also covers "multiple parallel stacks of electrolyser cells".

An important part of the system according to the present invention is the manifold, or splitter, which splits the feed coming from the electrolyte feed pump and divides such out to the plurality of electrolyser cells. Such allows a single pump of electrolyte to serve a plurality of (either cathode side or anode side) of parallelly-operated electrolyser cells. It was found that the above objective to avoid short circuit or stray currents can conveniently be achieved if this manifold is made of electrically non-conductive material and/or all feed lines comprise at least a section that is made of electrically non-conductive material. If the manifold is made of an electrically non-conductive material this has the advantage that only a single piece of equipment has to be made of such material, and also such can be conveniently made out of glass or a polymeric material.

The requirement to avoid stray current or short circuit can also be fulfilled by making each of the feed lines over its entire length from an electrically non-conductive material, or to do so with just a section of such feed line, e.g. by having a plastic flange as part of each feed line (e.g. where they are connected to the cells) or by having the flow restrictors (which are part of the feed lines) made of an electrically non-conductive material. For this reason, in the alternative to the manifold being from electrically non-conductive material, all feed lines comprise at least a section that is made of electrically non-conductive material, or both (all feed lines and the manifold). Practical examples of electrically non-conductive material in the present context are polymeric materials such as PEEK, and glass. Hence, in the present invention it is preferred that the electrically non-conductive material is glass or polymeric material.

The function of the flow restrictors in the individual is to create a stable, pre-determined flow to the cells, as these flow restrictors can be manufactured with sufficient precision. In order to create a stable flow of electrolyte it is desirable that a feed pump delivers the electrolyte feed at a pressure which higher than the pressure of the feed in the electrolyser cells. Preferably the pressure at which the pump delivers the feed to the manifold is at least 5 bar higher than the pressure in the electrolysis cells, preferably at least 8 bars, more preferably at least 10 bars, at the flow rate desired for the cells. The pump can be controlled at either constant flow or constant pressure.

As mentioned, in order to create a stable flow of electrolyte at a pressure which is equal for all cells, each feed line comprises a flow restrictor. In combination with a pressure delivered by the pump, the flow restrictors create a flow at a stable, predictable, pressure in each of the feed lines, and thus to the electrolyser cells connected to them. The flow restrictors may be simple static flow restrictors such as a capillary, but they may also be of a tunable version, such as in-line flow controllers (e.g. tunable valve restrictors or proportional valves). Typically, the cells, e.g. for conducting research, are designed to have electrolyte flow rates per cell of between 10 and 500 ml/minute. Hence, it is preferred that the restrictors are designed to yield a flow rate per cell of between 10 and 500 ml/min, preferably between 50 and 300 ml/min.

When capillaries are used as flow restrictors, such can conveniently be combined with the manifold in a single device, like a chip or cassette. Such is fairly simple to manufacture and very compact. The disadvantage is that the flowrate to the cells is fixed. However, if different flow rates are preferred such single device can be exchanged for one with different capillaries, which is an advantage for such integrated manifold-capillary device. Typically, such devices are made out of polymeric material or glass. This provides the advantage that such is easy to manufacture, fairly cheap, and very compact. Hence, in the present invention, it is preferred that the manifold and flow restrictors are integrated in a device made of glass or polymeric material. For the systems according to the present invention, it is preferred that the flow restrictor in each feed line is suitable for obtaining a pressure drop of between 2 and 30 bar, when measured at a flow rate of 50 ml/min and with de-ionized water at 80°. More preferably, said pressure drop so measured is between 4 and 25 bar, and even more preferably between 5 and 20 bar.

Alternatively to capillaries which are not tunable, the system according to the invention may also be used with tunable flow restrictors. This provides the advantage that cells in the same system may have different flow rates of electrolytes, and that such can be adjusted during the process. To have such working well, it is desired that then each feed line also contains a flow sensor, and such flow sensor can be used to adjust or control the tunable flow restrictor. Hence, in the present invention it is preferred that the flow restrictors are tunable flow restrictors, and the feed lines comprise a flow sensor. Examples of tunable flow restrictors which could work well in such system are proportional valves or dome loaded valves, as such are available in industry for the flows and pressures desired. Hence, in the system according to the present invention the tunable flow restrictors are proportional valves or dome loaded valves.

In the system according to the present invention there is at least one set of pump and manifold, which feeds the multiple parallel electrolysers with electrolyte. Depending on the type, such may be at the anode side (e.g. for specific PEM or specific AEM cells), or both (for some PEM or AEL cells). Hence, depending on the type of cells and the wishes of the operator of the cells, it is be preferred that in the system according to the present invention, the first electrolyte feed system is connected to feed the electrolyte to the anode part of an electrolyser cell.

In the present invention, it may therefore be preferred that the electrolyser cells are selected from the group consisting of: a proton exchange membrane cell (PEM), an anion exchange membrane cell (AEM), and an alkaline electrolyser cell (AEL). The system, by virtue of the manifold and limited number of pumps, allows multiple cells to be operated in parallel, without undue equipment like pumps. Hence, the invention preferably relates to a system which comprises four or more parallel electrolysers cells, preferably eight or more parallel electrolyser cells. Although systems for electrolysis are known in which electrolysis cells are operated in parallel to boost production of hydrogen, the present system focusses on having cells operated in parallel in order to conduct research on electrolysis in an efficient manner, e.g. comparing various membranes and catalysts under otherwise equal reaction conditions. Electrolyser cells for research typically have a membrane size of 10 cm². The present equipment may also work well with smaller electrolyser cells, e.g. having membrane sizes of about 1 cm². Hence, in the present invention it is preferred that the cells have membranes or diaphragms of between 0.8 and 25 cm², more preferably between 1 and 12 cm², most preferably from 1 to 10 cm².

A preferred electrolyte in the present system is de-ionized water, in particular for systems with PEM cells.

As mentioned, for some cells a feed of electrolyte to both anode side and cathode side of electrolyte is desired. In such case, it is desired that the system according to the present invention comprises, next to a first electrolyte feed system as mentioned, a second electrolyte feed system, wherein the first electrolyte feed system is connected to the anode part of the electrolyser cells and the second electrolyte feed system is connected to the cathode part of the electrolyser cells (or vice versa).

The present invention further relates to a process for electrolysing an aqueous electrolyte to produce hydrogen and oxygen using a system according to the present invention, and as set out above. Typically, the cells, e.g. for conducting research, have electrolyte flow rates per cell of between 10 and 500 ml/minute. Hence, it is preferred that in such process the electrolyte flow rate per cell is between 10 and 500 ml/min, preferably between 50 and 300 ml/min. Cells typically have sizes such that the membrane or electrolyte has a surface area of between 1 and 25 cm², more preferably between 1 and 12 cm². Hence, it is preferred that in the present invention the electrolyser cells have a membrane or diaphragm having a surface area of between 1 and 25 cm², preferably between 1 and 12 cm², and even more preferably between 1 and 10 cm². Preferably, in the present process the electrolyser cells are preferably operated at a pressure of between 5 and 100 barg, preferably between 10 and 50 barg, and the electrolyser cells are preferably operated at a temperature of between 20 and 200°C, preferably between 50 and 150°C, more preferably between 50 and 90°C.

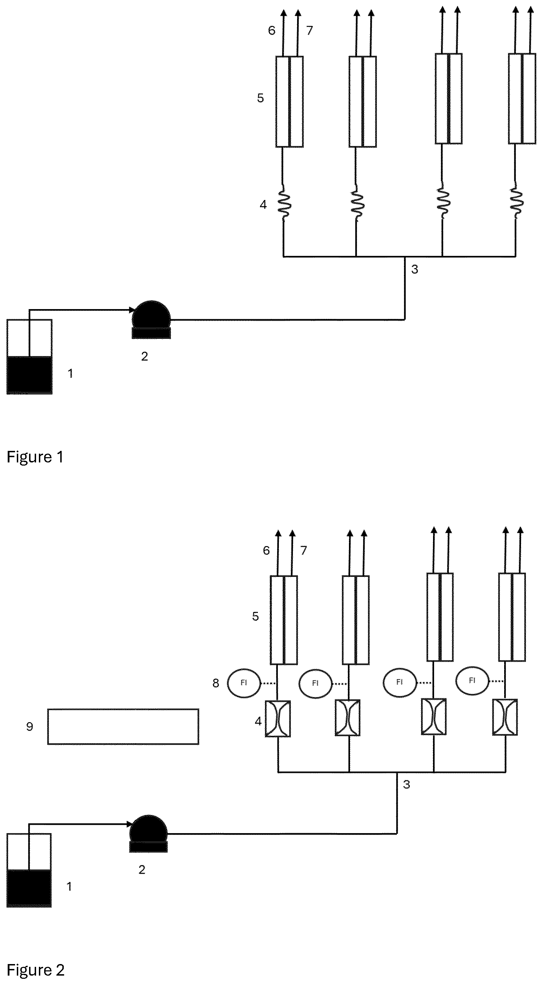

The equipment is further illustrated by figures 1 and 2. In these examples, only the anode side receives a feed of liquid, but the same can be done for the cathode side. The invention is not restricted to only a liquid feed to the anode side. Also, in the figures the power supply for supplying electrolyser cells with electric potential is omitted from the drawings for reasons of clarity, as the invention focusses on other matters.
In figure 1:
   1: liquid electrolyte feed supply
   2: pump
   3: manifold to distribute the liquid electrolyte
   4: flow restrictor resulting in a pressure drop
   5: electrolyser cell with anode and cathode side
   6: anode outlet
   7: cathode outlet
In figure 2:
   1: liquid electrolyte feed supply
   2: pump
   3: manifold to distribute the liquid electrolyte
   4: tunable flow restrictor
   5: electrolyser cell with anode and cathode side
   6: anode outlet
   7: cathode outlet
   8: flow sensor for controlling the tunable flow restrictor
   9: electronic control system, using the measured flow (8) to change the value of the tunable flow restrictor (4)

## Claims

1. System for conducting electrolysis of an aqueous liquid to produce hydrogen and oxygen, which system comprises:
a. multiple parallel electrolyser cells, each electrolyser cell comprising an anode and a cathode,
b. a first electrolyte feed system to feed electrolyte to each electrolyser cell, the first electrolyte feed system comprising:
- an electrolyte,
- a pump for pumping the electrolyte,
- a manifold having an inlet connected to the pump, the manifold splitting said inlet in multiple feed lines, each feed line connected to a single electrolyser cell,
- each feed line comprising a flow restrictor downstream of the manifold and upstream of the electrolyser cells,
wherein the manifold is made of electrically non-conductive material and/or all feed lines comprise at least a section that is made of electrically non-conductive material,
c. each electrolyser cell containing one or more outlets for gas and/or liquid,
d. a power supply, for supplying electrolyser cells with electric potential.

2. System according to claim 1, wherein the electrically non-conductive material is glass or polymeric material.

3. System according to claim 1 or 2, wherein the manifold and flow restrictors are integrated in a device made of glass or polymeric material.

4. System according to claim 1 or 2, wherein the flow restrictors are tunable flow restrictors, and the feed lines comprise a flow sensor.

5. System according to claim 4, wherein the tunable flow restrictors are proportional valves or dome loaded valves.

6. System according to any of the preceding claims, wherein the flow restrictor in each feed line can achieve a pressure drop of between 2 and 30 bar, when measured at a flow rate of 50 ml/min and with de-ionized water at 80°C.

7. System according to any of the preceding claims, wherein the first electrolyte feed system is connected to multiple electrolyser cells to feed the electrolyte to the anode part of said electrolyser cells.

8. System according to any of the preceding claims, wherein the system comprises a second electrolyte feed system, wherein the first electrolyte feed system is connected to the anode part of the electrolyser cells and the second electrolyte feed system is connected to the cathode part of the electrolyser cells.

9. System according to any of the preceding claims, wherein the electrolyser cells are selected from the group consisting of: a proton exchange membrane cell, an anion exchange membrane cell, and an alkaline electrolyser cell.

10. System according to any of the preceding claims, wherein the system comprises four or more parallel electrolysers cells, preferably eight or more parallel electrolyser cells.

11. System according to any of claims 1 to 11, wherein the electrolyser cells have a membrane between the electrodes having a surface area of between 1 and 25 cm², preferably between 1 and 12 cm², and more preferably between 1 and 10 cm².

12. Process for electrolysing an aqueous electrolyte to produce hydrogen and oxygen using a system according to any of claims 1 to 12.

13. Process according to claim 13, wherein the electrolyte flow rate per cell is between 10 and 500 ml/min, preferably between 50 and 300 ml/min.

14. Process according to claim 13 or 14, wherein the electrolyser cells are operated at a pressure of between 5 and 100 barg, preferably between 10 and 50 barg.

15. Process according to any of claims 13 to 15, wherein the electrolyser cells are operated at a temperature of between 20 and 200°C, preferably between 50 and 150°C, and more preferably between 50 and 90°C.
